# FASCICULE DE BREVET EUROPEEN

(11) **EP 4 564 777 B1**
(45) Date de publication et mention de la délivrance du brevet: **22.07.2026**
(21) Numéro de dépôt: 24216340.0
(22) Date de dépôt: 29.11.2024
(51) Int. Cl.: H04L 47/2425, H04L 47/2441

(54) **PROCÉDÉ DE COMMUNICATION AVEC CLASSIFICATION ET PRIORISATION ET DISPOSITIF ASSOCIÉ**
KOMMUNIKATIONSVERFAHREN MIT KLASSIFIZIERUNG UND PRIORISIERUNG UND VORRICHTUNG DAFÜR
METHOD FOR COMMUNICATION WITH CLASSIFICATION AND PRIORITIZATION AND RELATED DEVICE

(30) Priorité: 30.11.2023 FR 2313326
(43) Date de publication de la demande: 04.06.2025
(73) Titulaire: NAVAL Group, 75015 Paris (FR)
(72) Inventeur: MICHEL, Mikael, 83190 OLLIOULES (FR)
(74) Mandataire: Lavoix

(56) Documents cités:
- US-A1- 2007 253 438

## Description

La présente invention concerne un procédé de communication entre un dispositif électronique d'émission et un dispositif électronique de réception, le dispositif électronique d'émission et le dispositif électronique de réception faisant partie d'un réseau, le procédé comprenant une phase d'émission mise en oeuvre par le dispositif électronique d'émission. L'invention concerne en outre un dispositif électronique d'émission.

Les échanges des données entre les dispositifs électroniques d'un réseau s'appuient sur un système de communication présentant une bande passante totale.

De plus, l'ensemble des données échangées est, par exemple, séparé en différentes classes de service par des règles de marquage, afin de différentier différents flux. A chaque classe de service est attribuée une portion de la bande passante. US 2007/253438A1 propose des services différenciés pour des flux différents en combinant groupement de files, gestion de la congestion et poids des différents flux.

En cas de quantité de données échangées importante, la bande passante disponible est susceptible d'être insuffisante, en particulier pour écouler des flux dits « à temps contraints ».

Des mécanismes de lissage, par exemple un mécanisme dit de *trafic shaping*, sont, par exemple, mis en oeuvre pour résoudre une éventuelle congestion. Cela est néanmoins susceptible d'entraîner des retards dans la transmission de paquets, voire une non transmission de certains paquets.

De plus, en cas de données chiffrées et/ou de flux anonymisés, les mécanismes de lissage sont appliqués à l'ensemble des données issus d'une même classe de service sans discrimination entre les paquets, y compris issus de différentes applications.

De même, en cas d'utilisation d'un dispositif de pare-feu en amont de l'émission, il est impossible au moment de l'émission de pouvoir identifier la ou les applications envoyant les données si celles-ci utilisent des marquages communs.

Le but de l'invention est alors de proposer un procédé de communication permettant de gérer une quantité de données échangées importante en limitant le risque de retard de transmission et de non transmission des paquets.

A cet effet, l'invention a pour objet un procédé de communication selon la revendication 1.

Ainsi, le module de priorisation permet de réaffecter les paquets aux différentes classes de service en fonction d'au moins une métrique réseau, notamment pour éviter ou résoudre une congestion éventuelle.

Suivant d'autres aspects avantageux de l'invention, le procédé comprend une ou plusieurs des caractéristiques des revendications 2 à 11, prises isolément ou suivant toutes les combinaisons techniquement possibles.

L'invention concerne également un dispositif électronique d'émission selon la revendication 12.
L'invention concerne également un procédé de communication selon la revendication 13.

Suivant d'autres aspects avantageux de l'invention, le procédé comprend une ou plusieurs des caractéristiques des revendications 14 et 15, prises isolément ou suivant toutes les combinaisons techniquement possibles.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue schématique d'un dispositif électronique d'émission selon un exemple de mode de réalisation de l'invention,

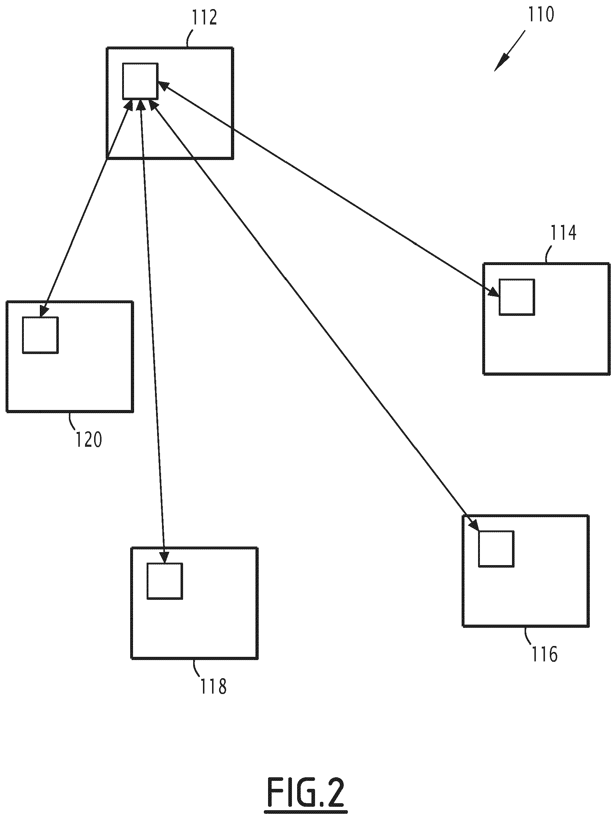

[Fig 2] la figure 2 est une vue schématique d'un réseau comprenant une pluralité de dispositifs électroniques,
[Fig 3] la figure 3 est une vue schématique du procédé.

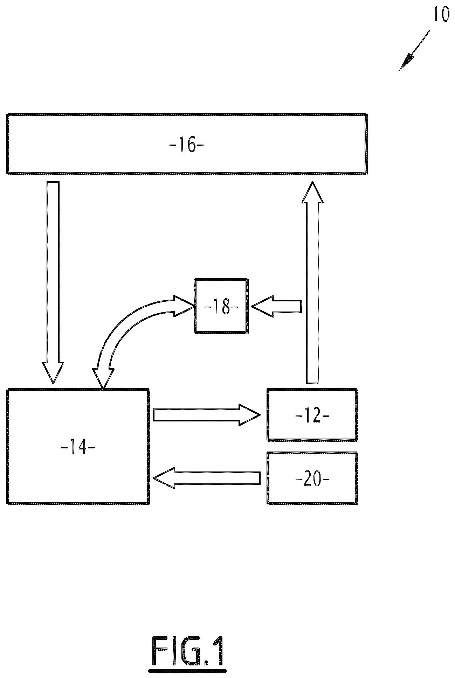

Un exemple de dispositif électronique d'émission est représenté sur la figure 1.

Le dispositif électronique d'émission 10 comprend un module de d'échange 12, un module de priorisation 14 et un module d'émission 16, comme représenté sur la figure 1.

Le module d'échange 12 est, ici, connecté au module de priorisation 14 et au module d'émission 16.

Plus particulièrement, le module d'échange 12 est apte à recevoir des données du module de priorisation 14 et à envoyer des données au module d'émission 16.

Le module de priorisation 14 est ici connecté au module d'échange 12 et au module d'émission 16.

Plus particulièrement, le module de priorisation 14 est adapté pour recevoir des données du module d'émission 16 et à envoyer des données au module d'échange 12.

Le module d'émission 16 est ici connecté au module de priorisation 14 et au module d'échange 12.

Plus particulièrement, le module d'émission 16 est adapté pour recevoir des données du module d'échange 12 et à envoyer des données au module de priorisation 14.

Le module d'émission 16 est ici apte à envoyer au module de priorisation au moins une métrique réseau d'un réseau comprenant le dispositif électronique d'émission 10.

L'au moins une métrique réseau comprend, par exemple, au moins une métrique de routage de la bande passante effective pour chacune des classes de service, comme cela sera décrit plus en détail par la suite.

Le dispositif électronique d'émission 10 comprend en outre, ici, une sonde de mesure 18 adaptée pour mesurer la quantité de données transmises depuis le module d'échange 12 vers le module d'émission 16, plus particulièrement pour chaque classe de service.

Dans un mode de réalisation particulier, la sonde de mesure 18 est en outre apte à modifier l'entête IP des paquets de données transmis depuis le module d'échange 12 vers le module d'émission 16.

En complément facultatif, le dispositif électronique d'émission comprend un module de contextualisation 20 connecté au module de priorisation 14.

Alternativement, le dispositif électronique d'émission ne comprend pas de module de contextualisation, le contexte de priorisation étant alors, par exemple, fourni au module de priorisation par un module extérieur au dispositif électronique d'émission, comme cela sera décrit plus en détail par la suite.

Le dispositif électronique d'émission comprend une unité de traitement d'informations formée par exemple d'une mémoire et d'un processeur associé à la mémoire.

Dans l'exemple de la figure 1, le module d'échange 12, le module de priorisation 14 et le module d'émission 16, ainsi qu'en complément facultatif le module de contextualisation 20, sont réalisés chacun sous forme d'un logiciel, ou d'une brique logicielle, exécutable par le processeur. La mémoire du dispositif électronique d'émission est alors apte à stocker un logiciel d'échange, un logiciel de priorisation, et un logiciel d'émission, ainsi qu'en complément facultatif un logiciel de contextualisation. Le processeur est alors apte à exécuter chacun des logiciels parmi le logiciel d'échange, le logiciel de priorisation, et le logiciel d'émission, ainsi qu'en complément facultatif le logiciel de contextualisation.

En variante non représentée, le module d'échange 12, le module de priorisation 14 et le module d'émission 16, ainsi qu'en complément facultatif le module de contextualisation 20, sont réalisés chacun sous forme d'un composant logique programmable, tel qu'un FPGA (de l'anglais Field Programmable Gate Array), ou encore d'un circuit intégré, tel qu'un ASIC (de l'anglais Application Specific Integrated Circuit).

Lorsque le dispositif électronique d'émission est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le dispositif électronique d'émission fait ici, par exemple, partie d'un réseau de communication 110, comprenant une pluralité de dispositifs électroniques 112, 114, 116, 118, 120 adaptés pour communiquer entre eux, plus particulièrement en s'appuyant sur un système de télécommunication.

Au moins un des dispositifs électroniques est un dispositif électronique d'émission tel que décrit précédemment, avec ou sans module de contextualisation 20.

Les dispositifs électroniques sont, par exemple, des dispositifs électroniques d'émission tels que décrits précédemment, avec ou sans module de contextualisation 20.

Chaque dispositif électronique comprend, en outre, au moins un module de réception.

Ainsi, chaque dispositif électronique est susceptible d'émettre et de recevoir des données des autres dispositifs électroniques du réseau.

Chaque dispositif électronique est alors susceptible d'être un dispositif électronique d'émission et un dispositif électronique de réception, selon s'il reçoit ou émet des données.

Alternativement, certains dispositifs électroniques du réseau sont dépourvus de module de réception et/ou certains dispositifs électroniques sont dépourvus de module d'échange, de module de priorisation et de module d'émission, lesdits dispositifs électroniques étant alors uniquement un dispositif électronique d'émission ou respectivement un dispositif électronique de réception, par exemple dans le cadre d'un protocole de datagramme utilisateur ou UDP pour *User Datagram Protocol* en anglais.

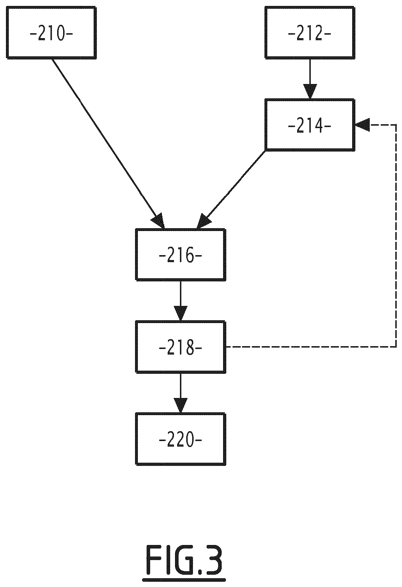

Un exemple de procédé de communication entre un dispositif électronique d'émission et un dispositif électronique de réception selon un exemple de mode de réalisation selon l'invention va maintenant être décrit en regard de la figure 3.

Le dispositif électronique d'émission et le dispositif électronique de réception font partie d'un réseau de télécommunication.

Les échanges des données entre les dispositifs électroniques du réseau s'appuient sur un système de communication présentant une bande passante totale.

Le dispositif électronique d'émission et le dispositif électronique de réception, et ici en outre le réseau, sont, par exemple, tels que décrits précédemment.

L'ensemble des données susceptibles d'être échangées est, par exemple, séparé en une pluralité de classes de service. A chaque classe de service est attribuée une portion respective de la bande passante totale.

La portion respective de la bande passante totale attribuée à chaque classe de service est, par exemple, identique pour les différentes classes de service.

Chaque classe de service présente, par exemple, une priorité technique respective, en particulier par rapport aux moyens du système de communication susceptibles d'être utilisés pour transmettre les informations relatives à ladite classe de service.

La priorité technique est, en particulier, prise en compte par le module d'émission 16, dans sa gestion des priorités d'émission.

Les différentes classes de service sont susceptibles de présenter des priorités techniques différentes, plus ou moins importantes.

Le procédé comprend une phase d'émission mise en œuvre par le dispositif électronique d'émission.

La phase d'émission comprend les étapes suivantes :
- fourniture d'une pluralité de paquets de données au module d'échange 12, chaque paquet comprenant un champ de classification, chaque paquet étant associé à un groupement (étape 210 sur la figure 3),
- fourniture au module de priorisation 14 d'un contexte de priorisation et d'au moins une métrique du réseau (212),
- détermination par le module de priorisation 14 d'une classification priorisée pour chaque groupement (214),
- fourniture par le module de priorisation 14 au module d'échange de la classification priorisée pour le ou les différents groupements (216), chaque classification priorisée étant associée à une valeur de champ de classification respective,
- pour chaque groupement, pour chaque paquet associé audit groupement, attribution au champ de classification la valeur de champ de classification correspondant à la classification priorisée du groupement (218), et
- émission de la pluralité de paquets avec le champ de classification attribué par le module d'émission 16 (220).

Chaque champ de classification est, par exemple, compris dans l'en-tête du paquet correspondant, plus particulièrement dans le champ dit « *Differentiated Services Code Point* » ou DSCP pour point de code des services différenciés en français, plus particulièrement sur trois bits.

Le champ de classification permet notamment d'indiquer un marquage du paquet dans une classe de service.

Chaque paquet est associé à un groupement parmi une pluralité de groupements possibles.

Les groupements correspondent, par exemple, à une répartition des sujets de communication susceptibles d'être réalisés sur le réseau.

Par exemple, dans une situation à visée uniquement illustrative d'un sauvetage en mer, pour permettre de mieux illustrer le concept de l'invention, les différents groupements comprennent, par exemple, les possibilités suivantes : Détresse, Suspect (on suspecte que le navire a besoin d'aide), Inconnu, Aide, Météo et Neutre (le navire n'a pas besoin d'aide, mais ne fait pas partie de l'aide).

Le contexte de priorisation associe à chaque groupement un poids opérationnel.

Le contexte de priorisation comprend, par exemple, une matrice ou une liste reliant chaque groupement à un poids opérationnel respectif.

Le poids opérationnel est représentatif de l'importance opérationnel que revêt ledit groupement.

Le poids opérationnel est, par exemple, un nombre tel que plus le nombre est faible, plus le groupement est important, ou inversement.

Le contexte de priorisation est, par exemple, généré par un module de contextualisation.

Alternativement, le contexte de priorisation est fourni par un dispositif extérieur au dispositif électronique d'émission.

Alternativement, le contexte de priorisation est pré-enregistré dans le dispositif électronique d'émission.

Dans l'exemple d'illustration, il est, par exemple, attribué les poids opérationnels suivants aux différents groupements : Détresse 1, Suspect 2, Inconnu 4, Aide 2, Météo 3, et Neutre 5.

La détermination par le module de priorisation 14 de la classification priorisée pour chaque groupement est réalisée en fonction du poids opérationnel du contexte de priorisation dudit groupement et de l'au moins une métrique du réseau.

La détermination de la classification priorisée prend, par exemple, en outre, en compte la quantité de données mesurée par la sonde de mesure 18.

La classification priorisée correspond à une des classes de service définies précédemment.

Dans l'exemple d'illustration, on va, par exemple, considérer trois classes de service de priorité technique croissante : la classe 1 prioritaire, la classe 2 intermédiaire, et la classe 3 non prioritaire.

L'au moins une métrique réseau est adaptée pour avoir une vision de l'état éventuel de congestion du système de télécommunication utilisé pour chacune des classes de service.

L'au moins une métrique réseau comprend, par exemple, au moins une métrique de routage de la bande passante effective pour chacune des classes de service sur le réseau.

Plus particulièrement, l'au moins une métrique réseau comprend, par exemple, la bande passante respective du réseau effectivement occupée à l'émission pour chaque classe de service.

Additionnellement ou alternativement, l'au moins une métrique réseau comprend, par exemple, la bande passante respective du réseau effectivement occupée à la réception pour chaque classe de service.

Additionnellement ou alternativement, l'au moins une métrique réseau comprend, par exemple, la latence pour chaque classe de service.

Pour chaque classe de service, est défini un seuil maximal respectif. Le seuil maximal respectif est, par exemple, égal à une proportion, ici par exemple 95%, de la bande passante autorisée pour cette classe de service.

Ladite proportion est, par exemple, la même pour toutes les classes de service.

Dans un mode de réalisation particulier, une ou des exigences minimales de priorité technique, dans l'attribution de la classe de service, pour un ou des poids opérationnels sont fournis au module de priorisation 14.

Ladite ou lesdites exigences minimales de priorité technique sont, par exemple, comprises dans le contexte de priorisation.

Au moins un, par exemple chaque, poids opérationnel est, par exemple, associé à une priorité technique minimale.

Dans le mode de réalisation ci-dessus, la priorité technique minimale correspond à la ou les exigences minimales pour ledit ou lesdits poids opérationnels.

La détermination par le module de priorisation 14 de la classification priorisée pour chaque groupement est réalisée de sorte que ladite ou lesdites exigences minimales de priorité technique sont toujours respectées.

Dans l'exemple d'illustration, on va, par exemple, considérer les exigences suivantes : le poids opérationnel 1 ne peut pas être attribué à une classe de service moins prioritaire que la classe 1, et le poids opérationnel 2 ne peut pas être attribué à une classe de service moins prioritaire que la classe 2.

Au début de l'étape de détermination de la classification priorisée, une priorisation initiale est, par exemple, mémorisée par le module de priorisation.

La priorisation initiale correspond à une classification au début de l'étape de détermination pour chaque groupement.

La priorisation initiale comprend, par exemple, pour chaque groupement, une classification priorisée déterminée précédemment, en particulier par le module de priorisation.

La priorisation initiale correspond ici aux classifications priorisées déterminées par le module de priorisation lors d'au moins une itération précédente, plus particulièrement lors de la dernière itération, comme cela sera décrit plus en détail par la suite.

La priorisation initiale est, par exemple, la priorisation appliquée jusqu'à présent.

Alternativement, la priorisation initiale est, par exemple, pour chaque groupement, une classification priorisée déterminée arbitrairement, par exemple correspondant à la classe de service présentant la priorité de l'exigence minimale du poids opérationnel dudit groupement.

Alternativement, la priorisation initiale est fournie au module de priorisation.

Dans l'exemple illustratif, la priorisation initiale est, par exemple, la suivante : Détresse classification 1, Suspect classification 2, Inconnu classification 3, Forces d'intervention classification 1, Météo classification 3, et Neutre classification 3.

L'étape de détermination de la classification priorisée comprend, pour au moins une classe de service, plus particulièrement pour chaque classe de service à l'exception de la ou des classes de service avec la priorité technique la moins importante, la comparaison de l'au moins une métrique réseau à un seuil, plus particulièrement ici la comparaison de l'au moins une bande passante occupée respective au seuil maximal respectif de la classe de service auquel est soustrait la quantité de données mesurée par la sonde de mesure 18.

Ainsi, le seuil est égal au seuil maximal respectif de la classe de service auquel est soustrait la quantité de données mesurée par la sonde de mesure 18.

Cela permet notamment de prendre en compte les données transmises au niveau de la sonde dans le seuil.

Dans le cas où l'au moins une bande passante occupée respective est strictement supérieur au seuil donné pour la classe de service, l'étape de détermination de la classification priorisée comprend alors une réattribution par le module de priorisation à une classification priorisée d'au moins un groupement pour lequel la classification de la priorisation initiale correspond à ladite classe de service, dit groupement réattribué.

La classification priorisée correspond, par exemple, à la classification inférieure ou supérieure, en termes de priorité, la plus proche de la classification de la priorisation initiale.

Dans l'exemple illustratif, la bande passante pour la classe 1 est, par exemple, strictement supérieure au seuil maximal de la classe 1 réduit de la quantité de données mesurée par la sonde pour la classe 1. Ainsi, l'un entre le groupement Détresse et Aide est réattribué à une autre classification correspondant à une autre classe de service.

La classification priorisée présente, par exemple, une priorité strictement inférieure à la classification de la priorisation initiale, plus particulièrement une priorité inférieure la plus proche de la classification de la priorisation initiale.

Ainsi, le groupement réattribué est réattribué vers une classe de priorité inférieure.

Dans l'exemple illustratif, l'un entre le groupement Détresse et Aide est ainsi réattribué à la classe 2.

Dans le cas où l'au moins une bande passante occupée respective est strictement supérieur au seuil donné pour la classe de service, la phase d'émission comprend plus particulièrement une étape de comparaison des poids opérationnels de chacun des groupements pour lesquels la classification priorisée déterminée précédemment correspond à ladite classe de service avant l'étape de réattribution.

Dans l'exemple illustratif, les poids opérationnels des groupements Détresse et Aide sont comparés : Détresse 1 et Aide 2.

Le groupement présentant le poids opérationnel le moins important de l'ensemble des groupements pour lesquels la classification de la priorisation initiale correspond à ladite classe de service est sélectionné comme l'au moins un groupement réattribué.

Dans l'exemple illustratif, le poids opérationnel 1 est plus important que le poids opérationnel 2, donc le groupement Aide est sélectionné.

Si, lors de l'étape de comparaison des poids opérationnels, une pluralité de groupements présente le poids opérationnel le moins important, le groupement réattribué est, par exemple, le groupement de poids opérationnel le moins important qui occupe le moins de bande passante sur une fenêtre de temps, par exemple sur une fenêtre glissante de 10 secondes.

Alternativement, un autre critère départage les différents groupements de poids opérationnel le moins important.

La phase d'émission comprend, par exemple, en outre, une étape de vérification de l'existence d'une exigence minimale de priorité du poids opérationnel le moins important, et le cas échéant une étape de comparaison de la priorité de la classification priorisée à la priorité de l'exigence minimale du poids opérationnel le moins important, l'étape de réattribution étant mise en œuvre uniquement si la priorité de la classification priorisée est supérieure ou égale à la priorité technique de l'exigence minimale du poids opérationnel le moins important.

Dans l'exemple illustratif, un groupement de poids opérationnel 2 ne peut pas être attribué à une classe de service moins prioritaire que la classe 2. Ici, le groupement Aide est prévu d'être réattribué à la classe 2 : cela vérifie la priorité minimale du poids 2. L'étape de réattribution est donc mise en œuvre, et, la classification priorisée du groupement Aide correspond à la classe 2.

Si la classification priorisée est strictement inférieure à la priorité minimale du poids opérationnel le moins important, alors l'étape de réattribution n'est pas mise en œuvre, et la classification priorisée du groupement réattribué est alors la classification de la priorisation initiale. Cela permet donc de prendre en compte les contraintes liées à la priorisation des données échangées.

Dans le cas où l'au moins une bande passante occupée respective est inférieure ou égale au seuil maximal respectif de la classe de service, alors il n'y a pas ladite étape de réattribution décrite précédemment.

Dans un mode de réalisation particulier, l'étape de détermination de la classification priorisée comprend, en outre, pour au moins une classe de service, ici pour chaque classe de service à l'exception de la ou des classes de service avec la priorité technique la plus importante, la comparaison de l'au moins une bande passante occupée respective à un seuil minimal respectif de la classe de service.

Le seuil minimal respectif est, par exemple, tel que l'écart entre le seuil maximal et le seuil minimal de la classe de service, est supérieure ou égale à la quantité de données émises depuis le module d'échange vers le module d'émission pour la classe de service de priorité moins importante la plus proche.

Plus particulièrement, ici, le seuil minimal respectif est, par exemple, égal au minimum entre une portion du, ici 0,6 fois, le seuil maximal respectif de la classe de service et la différence entre le seuil maximal de la classe de service et la quantité de données émises depuis le module d'échange vers le module d'émission pour la classe de service de priorité moins importante la plus proche.

Cela permet notamment d'éviter les phénomènes d'instabilité ou oscillations.

Dans le cas où l'au moins une bande passante occupée respective est strictement inférieur au seuil minimal respectif de la classe de service auquel est ajoutée la quantité de données mesurée par la sonde de mesure 18, l'étape de détermination comprend, en outre, une sous-étape de réattribution par le module de priorisation à la classification priorisée correspondant à ladite classe de service d'au moins un groupement présentant une classification ne correspondant pas à ladite classe de service.

Plus particulièrement, la classification précédente dudit groupement présente une priorité strictement inférieure à ladite classe de service, plus particulièrement ici la plus proche de la classification correspondante à ladite classe de service, et présentant le poids opérationnel le plus important des groupements de ladite classification de la priorisation initiale.

La classification précédente correspond à la classification de la priorisation initiale si le groupement n'a pas déjà été réattribué pendant l'étape de détermination, ou la classification priorisée déjà réattribuée audit groupement.

A la fin de l'étape de détermination par le module de priorisation de la classification priorisée, la classification priorisée d'un groupement correspond à la classification de la priorisation initiale si le groupement n'a pas été réattribué pendant l'étape de détermination ou la classification priorisée réattribuée audit groupement, le cas échéant.

Le module de priorisation fournit ensuite au module d'échange de la classification priorisée à l'issu de l'étape de détermination, par exemple telle que décrite précédemment, pour le ou les différents groupements.

Puis, le module d'échange transmet à un module d'émission la pluralité de paquets avec le champ de classification attribué.

Le module d'émission émet alors la pluralité de paquets avec le champ de classification attribué.

La télécommunication des paquets est réalisée grâce à des moyens du système de communication conforme à la classe de service correspondant à la classification priorisée, par la consultation du champ de classification des paquets.

Cela permet ainsi que les moyens du système de communication utilisés soient en accord avec le poids opérationnel correspondant aux paquets, quand bien même le contenu de l'information transmis par les paquets serait chiffré, tout en permettant une adaptation de la classification en cas de saturation de la bande passante.

Le procédé de communication comprend, en outre, une phase de réception mise en œuvre par le dispositif électronique de réception, la phase de réception comprenant la réception par le dispositif électronique de réception de la pluralité de paquets émis.

Les étapes de détermination par le module de priorisation 14 d'une classification priorisée pour chaque groupement (214), de fourniture par le module de priorisation 14 au module d'échange de la classification priorisée pour le ou les différents groupements (216), et pour chaque groupement, pour chaque paquet associé audit groupement, d'attribution au champ de classification la valeur de champ de classification correspondant à la classification priorisée du groupement (218), sont, par exemple, réitérées.

A chaque nouvelle itération, dans l'exemple décrit, les configurations de la priorisation initiale correspondent aux configurations priorisées à l'issue de l'étape de détermination de la dernière itération.

Plus particulièrement, ces étapes sont réitérées à chaque fois que le module de priorisation 14 reçoit une nouvelle mesure de l'au moins une métrique réseau et une nouvelle mesure issue de la sonde de mesure 18.

Ces étapes sont, par exemple, réitérées avec une fréquence au moins égale à celle avec laquelle parviennent les métriques réseau, en particulier si l'au moins une métrique réseau est transmise avec une fréquence inférieure à une fréquence d'acquisition de la sonde de mesure 18.

Alternativement, ces étapes sont réitérées avec une fréquence au moins égale à celle avec laquelle parviennent les mesures issues de la sonde de mesure 18.

Alternativement, ces étapes sont réitérées à chaque fois que des paquets sont fournis au module d'échange.

Alternativement, ces étapes sont réitérées à chaque détection d'un problème de saturation sur le réseau.

Plus particulièrement, la phase d'émission comprend, par exemple, une étape de surveillance de l'au moins une métrique réseau. L'étape de surveillance comprend, par exemple, la comparaison, pour chaque classe de service, de l'au moins une bande passante occupée respective au seuil maximal respectif de la classe de service. Lorsque l'au moins une bande passante occupée respective est strictement supérieur au seuil maximal respectif de la classe de service, alors ces étapes sont réitérées.

En l'absence de réitération, en cas de fourniture de paquets au module d'échange, les paquets sont émis avec le champ de classification attribué lors de l'itération précédente.

Dans un mode de réalisation alternatif non représenté, le module d'échange 12 est compris dans la sonde 18.

La sonde 18 est alors, par exemple, adaptée pour mesurer la quantité de données transmises depuis le module d'échange 12 vers le module d'émission 16 et de données correspondant à la pluralité de paquets au niveau du module d'échange 12, plus particulièrement pour chaque classe de service.

L'invention concerne en outre un procédé de communication entre une pluralité de dispositifs électroniques aptes à communiquer entre eux, ici selon un réseau tel que décrit précédemment.

Au moins un des dispositifs électroniques est apte à mettre en œuvre une phase d'émission telle que décrite précédemment, et au moins un autre des dispositifs électroniques est apte à mettre en œuvre une phase de réception telle que décrite précédemment.

Plus particulièrement ici, chacun des dispositifs électroniques est apte à mettre en œuvre une phase d'émission telle que décrite précédemment, plus particulièrement une phase d'émission et une phase de réception telles que décrites précédemment.

Les modules de priorisation des dispositifs électroniques sont aptes à communiquer entre eux, plus particulièrement par l'intermédiaire du réseau.

Dans l'exemple représenté, les modules de priorisation des dispositifs électroniques sont, par exemple, aptes à communiquer entre eux par l'intermédiaire d'un des modules de priorisation, dit module de priorisation coordinateur.

Alternativement, ils sont aptes à communiquer directement entre eux.

Les contextes de priorisation de chacun des modules de priorisation des dispositifs électroniques sont identiques.

En cas de changement du contexte de priorisation, le procédé comprend, par exemple, une étape de fourniture du nouveau contexte de priorisation au module de priorisation coordinateur, puis une étape de transmission dudit nouveau contexte de priorisation à chacun des autres modules de priorisation.

Alternativement, le procédé comprend, par exemple, une étape de comparaison des contextes de priorisation entre au moins deux modules de priorisation, par exemple successivement entre le module de priorisation coordinateur et chacun des autres modules de priorisation, et, en cas de divergence, de correction du contexte de priorisation de l'un des deux modules de priorisation, plus particulièrement de correction du contexte de priorisation de l'autre des modules de priorisation pour correspondre au contexte de priorisation du module de priorisation coordinateur.

Cela permet notamment d'appliquer des critères semblables sur l'ensemble du réseau.

Les dispositifs électroniques sont, par exemple, en outre aptes à communiquer entre eux la quantité de paquets reçus.

Cela permet notamment de vérifier que l'ensemble des paquets émis a bien été transmis.

En cas de détection que le nombre de paquets reçu est strictement inférieur au nombre de paquets émis, alors l'étape de détermination par le module de priorisation 14 d'une classification priorisée pour chaque groupement en délestant la classe de service correspondant, en considérant que le seuil maximal est dépassé, est par exemple réitéré.

Cela permet alors d'adapter la priorisation des paquets en cas de détection de pertes de paquets.

## Revendications

1. Procédé de communication entre un dispositif électronique d'émission (10) et un dispositif électronique de réception, le dispositif électronique d'émission et le dispositif électronique de réception faisant partie d'un réseau, le procédé comprenant une phase d'émission mise en œuvre par le dispositif électronique d'émission, la phase d'émission comprenant les étapes suivantes :
- fourniture d'une pluralité de paquets (210) à un module d'échange (12), chaque paquet comprenant un champ de classification, chaque paquet étant associé à un groupement, chaque champ de classification étant compris dans le champ dit « *Differentiated Services Code Point* » ou DSCP pour point de code des services différenciés en français,
- fourniture à un module de priorisation (14) d'un contexte de priorisation et d'au moins une métrique du réseau (212), le contexte de priorisation associant à chaque groupement un poids opérationnel,
- détermination par le module de priorisation (14) d'une classification priorisée pour chaque groupement en fonction du poids opérationnel dudit groupement et de l'au moins une métrique du réseau (216), la classification priorisée correspondant à une classe de service,
- fourniture par le module de priorisation (14) au module d'échange (12) de la classification priorisée pour le ou les différents groupements (216),
chaque classification priorisée étant associée à une valeur de champ de classification respective,
- pour chaque groupement, pour chaque paquet associé audit groupement, attribution au champ de classification la valeur de champ de classification correspondant à la classification priorisée du groupement (218), et
- émission de la pluralité de paquets (220) avec le champ de classification attribué par un module d'émission (16).

2. Procédé de communication selon la revendication 1, comprenant une phase de réception mise en œuvre par le dispositif électronique de réception, la phase de réception comprenant la réception par le dispositif électronique de réception de la pluralité de paquets émis.

3. Procédé de communication selon la revendication 1 ou 2, dans lequel chacune des classes de service présente une bande passante autorisée respective, l'au moins une métrique réseau comprenant au moins une métrique de routage de la bande passante effective pour chacune des classes de service.

4. Procédé de communication selon la revendication 3, dans lequel l'au moins une métrique réseau comprend la bande passante occupée respective pour chaque classe de service, l'étape de détermination de la classification priorisée comprenant, pour au moins une classe de service, la comparaison de l'au moins une bande passante occupée respective à un seuil , et, dans le cas où l'au moins une bande passante occupée respective est strictement supérieur au seuil , comprend une réattribution par le module de priorisation à une classification priorisée d'au moins un groupement pour lequel la classification d'une priorisation initiale correspond à ladite classe de service, dit groupement réattribué.

5. Procédé de communication selon la revendication 4, dans lequel la classification priorisée présente une priorité strictement inférieure à la classification de la priorisation initiale, la phase d'émission comprenant une étape de comparaison des poids opérationnels de chacun des groupements pour lesquels la classification de la priorisation initiale correspond à ladite classe de service avant l'étape de réattribution, le groupement présentant le poids opérationnel le moins important de l'ensemble des groupements pour lesquels la classification de la priorisation initiale correspond à ladite classe de service étant sélectionné comme l'au moins un groupement réattribué.

6. Procédé de communication selon la revendication 5, dans lequel, si, lors de l'étape de comparaison des poids opérationnels, une pluralité de groupements présente le poids opérationnel le moins important, le groupement réattribué est le groupement de poids opérationnel le moins important qui occupe le moins de bande passante sur une fenêtre de temps.

7. Procédé de communication selon la revendication 5 ou 6, dans lequel au moins un poids opérationnel est associé à une exigence minimale de priorité, la phase d'émission comprenant une étape de vérification de l'existence d'une exigence minimale de priorité pour le poids opérationnel le moins important, et le cas échéant, une étape de comparaison de la priorité de la classification priorisée à la priorité de l'exigence minimale du poids opérationnel le moins important, l'étape de réattribution étant mise en œuvre uniquement si la priorité de la classification priorisée est supérieure ou égale à la priorité de l'exigence minimale du poids opérationnel le moins important.

8. Procédé de communication selon l'une quelconque des revendications 1 à 7, dans lequel le dispositif électronique d'émission (10) comprend une sonde de mesure (18) adaptée pour mesurer la quantité de données transmises depuis le module d'échange (12) vers le module d'émission (16) pour chaque classe de service, la détermination par le module de priorisation (14) de la classification priorisée pour chaque groupement étant réalisée en outre en fonction de la quantité mesurée par la sonde de mesure (18).

9. Procédé de communication selon la revendication 8 lorsqu'elle dépend de l'une quelconque des revendications 4 à 7, dans lequel le seuil est égal à un seuil maximal respectif de ladite classe de service auquel est soustrait la quantité de données mesurée par la sonde de mesure (18).

10. Procédé de communication selon la revendication 9, dans lequel, pour chaque classe de service, le seuil maximal respectif est égal à une portion donnée de la bande passante autorisée respective, la portion donnée étant identique pour toutes les classes de service.

11. Procédé de communication selon l'une quelconque des revendications 4 à 10 dans lequel l'étape de détermination de la classification priorisée comprend, pour au moins une classe de service, la comparaison de l'au moins une bande passante occupée respective à un seuil minimal respectif de la classe de service, et, dans le cas où l'au moins une bande passante occupée respective est strictement inférieur au seuil minimal respectif de la classe de service, une réattribution par le module de priorisation à la classification priorisée correspondant à ladite classe de service d'au moins un groupement présentant une classification ne correspondant pas à ladite classe de service.

12. Dispositif électronique d'émission comprenant un module d'échange (12), un module de priorisation (14) et un module d'émission (16), le dispositif électronique d'émission étant adapté pour mettre en oeuvre une phase d'émission comprenant les étapes suivantes :
- fourniture d'une pluralité de paquets au module d'échange (12), chaque paquet comprenant un champ de classification, chaque paquet étant associé à un groupement, chaque champ de classification étant compris dans le champ dit « *Differentiated Services Code Point* » ou DSCP pour point de code des services différenciés en français,
- fourniture au module de priorisation (14) d'un contexte de priorisation et d'au moins une métrique du réseau, le contexte de priorisation associant à chaque groupement un poids opérationnel,
- détermination par le module de priorisation (14) d'une classification priorisée pour chaque groupement en fonction du poids opérationnel dudit groupement et de l'au moins une métrique du réseau, la classification priorisée correspondant à une classe de service,
- fourniture par le module de priorisation (14) au module d'échange (12) de la classification priorisée pour le ou les différents -groupements,
chaque classification priorisée étant associée à une valeur de champ de classification respective,
- pour chaque groupement, pour chaque paquet associé audit groupement, attribution au champ de classification une valeur de champ de classification correspondant à la classification priorisée du groupement, et
- émission de la pluralité de paquets avec le champ de classification attribué par le module d'émission (16).

13. Procédé de communication entre une pluralité de dispositifs électroniques adaptés pour communiquer entre eux par un procédé de communication selon l'une quelconque des revendications 1 à 11, au moins un des dispositifs électroniques étant adaptés pour mettre en œuvre la phase d'émission, les modules de priorisation des dispositifs électroniques étant aptes à communiquer entre eux.

14. Procédé de communication selon la revendication 13, dans lequel les modules de priorisation des dispositifs électroniques sont adaptés pour communiquer entre eux par l'intermédiaire d'un des modules de priorisation, dit module de priorisation coordinateur.

15. Procédé de communication selon la revendication 13 ou 14, dans lequel les contextes de priorisation de chacun des modules de priorisation des dispositifs électroniques sont identiques.

## Patentansprüche

1. Kommunikationsverfahren zwischen einer elektronischen Sendevorrichtung (10) und einer elektronischen Empfangsvorrichtung, wobei die elektronische Sendevorrichtung und die elektronische Empfangsvorrichtung Teil eines Netzes sind, das Verfahren umfassend eine Sendephase, die von der elektronischen Sendevorrichtung implementiert wird, die Sendephase umfassend die folgenden Schritte:
- Bereitstellen einer Vielzahl von Paketen (210) für ein Austauschmodul (12), jedes Paket umfassend ein Klassifizierungsfeld, wobei jedes Paket mit einer Gruppierung assoziiert ist und jedes Klassifizierungsfeld in dem sogenannten Feld "Differentiated Services Code Point" oder DSCP für Codepunkt differenzierter Dienste auf Deutsch enthalten ist,
- Bereitstellen eines Priorisierungsmoduls (14) eines Priorisierungskontextes und mindestens einer Metrik des Netzes (212), wobei der Priorisierungskontext mit jeder Gruppierung ein operatives Gewicht assoziiert,
- Bestimmung, durch das Priorisierungsmodul (14), einer priorisierten Klassifizierung für jede Gruppierung basierend auf dem operativen Gewicht der Gruppierung und der mindestens einen Metrik des Netzes (216), wobei die priorisierte Klassifizierung einer Dienstklasse entspricht,
- Bereitstellen, durch das Priorisierungsmodul (14), der priorisierten Klassifizierung für die einzelne(n) Gruppierung(en) (216) an das Austauschmodul (12),
wobei jede priorisierte Klassifizierung mit einem jeweiligen Klassifizierungsfeldwert assoziiert ist,
- für jede Gruppierung, für jedes mit dieser Gruppierung assoziierte Paket, Zuweisen des Klassifizierungsfeldwerts, der der priorisierten Klassifizierung der Gruppierung entspricht, an das Klassifizierungsfeld (218), und
- Senden der Vielzahl von Paketen (220) mit dem von einem Sendemodul (16) zugeordneten Klassifizierungsfeld.

2. Kommunikationsverfahren nach Anspruch 1, umfassend eine Empfangsphase, die von der elektronischen Empfangsvorrichtung implementiert wird, wobei die Empfangsphase das Empfangen, durch die elektronische Empfangsvorrichtung, der Vielzahl von gesendeten Paketen umfasst.

3. Kommunikationsverfahren nach Anspruch 1 oder 2, wobei jede der Dienstklassen eine jeweilige zulässige Bandbreite aufweist, wobei die mindestens eine Netzmetrik mindestens eine Routing-Metrik der effektiven Bandbreite für jede der Dienstklassen umfasst.

4. Kommunikationsverfahren nach Anspruch 3, wobei die mindestens eine Netzmetrik die jeweilige belegte Bandbreite für jede Dienstklasse umfasst, wobei der Schritt eines Bestimmens der priorisierten Klassifizierung für mindestens eine Dienstklasse das Vergleichen der mindestens einen jeweiligen belegten Bandbreite mit einem Schwellenwert, und, falls die mindestens eine jeweilige belegte Bandbreite strikt über dem Schwellenwert liegt, ein Neuzuordnen durch das Priorisierungsmodul zu einer priorisierten Klassifizierung mindestens einer Gruppierung umfasst, für die die Klassifizierung einer ursprünglichen Priorisierung der genannten Dienstklasse entspricht, wobei es die neu zugeordnete Gruppierung ist.

5. Kommunikationsverfahren nach Anspruch 4, wobei die priorisierte Klassifizierung eine strikt niedrigere Priorität als die Klassifizierung der ursprünglichen Priorisierung aufweist, wobei die Sendephase einen Schritt eines Vergleichens der operativen Gewichte jeder der Gruppierungen, für die die Klassifizierung der ursprünglichen Priorisierung der genannten Dienstklasse entspricht, vor dem Schritt der Neuzuordnung umfasst, wobei die Gruppierung mit dem geringsten operativen Gewicht aller Gruppierungen, für die die Klassifizierung der ursprünglichen Priorisierung der genannten Dienstklasse entspricht, als die mindestens eine neu zugeordnete Gruppierung ausgewählt wird.

6. Kommunikationsverfahren nach Anspruch 5, wobei, wenn bei dem Schritt eines Vergleichens der operativen Gewichte eine Vielzahl von Gruppierungen das geringste operative Gewicht aufweist, die neu zugeordnete Gruppierung die Gruppierung mit dem geringsten operativen Gewicht ist, die in einem Zeitfenster die geringste Bandbreite belegt.

7. Kommunikationsverfahren nach Anspruch 5 oder 6, wobei mindestens ein operatives Gewicht mit einer Mindestprioritätsanforderung assoziiert ist, wobei die Sendephase einen Schritt eines Überprüfens des Vorliegens einer Mindestprioritätsanforderung für das am wenigsten wichtige operative Gewicht und gegebenenfalls einen Schritt eines Vergleichens der Priorität der priorisierten Klassifizierung mit der Priorität der Mindestanforderung des am wenigsten wichtigen operativen Gewichts umfasst, wobei der Schritt eines Neuzuordnens nur dann durchgeführt wird, wenn die Priorität der priorisierten Klassifizierung größer oder gleich der Priorität der Mindestanforderung des am wenigsten wichtigen operativen Gewichts ist.

8. Kommunikationsverfahren nach einem der Ansprüche 1 bis 7, wobei die elektronische Sendevorrichtung (10) eine Messsonde (18) umfasst, die angepasst ist, um die Menge der vom Austauschmodul (12) an das Sendemodul (16) übertragenen Daten für jede Dienstklasse zu messen, wobei die Bestimmung der priorisierten Klassifizierung für jede Gruppierung durch das Priorisierungsmodul (14) zusätzlich basierend auf der von der Messsonde (18) gemessenen Menge erfolgt.

9. Kommunikationsverfahren nach Anspruch 8, wenn abhängig von einem der Ansprüche 4 bis 7, wobei der Schwellenwert gleich einem jeweiligen maximalen Schwellenwert der Dienstklasse ist, von dem die von der Messsonde (18) gemessene Datenmenge subtrahiert wird.

10. Kommunikationsverfahren nach Anspruch 9, wobei der jeweilige maximale Schwellenwert für jede Dienstklasse gleich einem gegebenen Anteil der jeweiligen zulässigen Bandbreite ist, wobei der gegebene Anteil für alle Dienstklassen gleich ist.

11. Kommunikationsverfahren nach einem der Ansprüche 4 bis 10, wobei der Schritt eines Bestimmens der priorisierten Klassifizierung für mindestens eine Dienstklasse ein Vergleichen der jeweiligen mindestens einen belegten Bandbreite mit einem jeweiligen Mindestschwellenwert der Dienstklasse umfasst, und, falls die mindestens eine jeweilige belegte Bandbreite strikt unter dem jeweiligen Mindestschwellenwert der Dienstklasse liegt, ein Neuzuordnen durch das Priorisierungsmodul zu der priorisierten Klassifizierung, die der Dienstklasse entspricht, von mindestens einer Gruppierung, die eine Klassifizierung aufweist, die der Dienstklasse nicht entspricht.

12. Elektronische Sendevorrichtung, umfassend ein Austauschmodul (12), ein Priorisierungsmodul (14) und ein Sendemodul (16), wobei die elektronische Sendevorrichtung angepasst ist, um eine Sendephase zu implementieren, die die folgenden Schritte umfasst:
- Bereitstellen einer Vielzahl von Paketen für das Austauschmodul (12), jedes Paket umfassend ein Klassifizierungsfeld, wobei jedes Paket mit einer Gruppierung assoziiert ist und jedes Klassifizierungsfeld in dem sogenannten Feld "Differentiated Services Code Point" oder DSCP für Codepunkt differenzierter Dienste auf Deutsch enthalten ist,
- Bereitstellen des Priorisierungsmoduls (14) eines Priorisierungskontextes und mindestens einer Metrik des Netzes, wobei der Priorisierungskontext mit jeder Gruppierung ein operatives Gewicht assoziiert,
- Bestimmung, durch das Priorisierungsmodul (14), einer priorisierten Klassifizierung für jede Gruppierung basierend auf dem operativen Gewicht der Gruppierung und der mindestens einen Metrik des Netzes, wobei die priorisierte Klassifizierung einer Dienstklasse entspricht,
- Bereitstellen, durch das Priorisierungsmodul (14), der priorisierten Klassifizierung für die einzelne(n) Gruppierung(en) an das Austauschmodul (12),
wobei jede priorisierte Klassifizierung mit einem jeweiligen Klassifizierungsfeldwert assoziiert ist,
- für jede Gruppierung, für jedes mit dieser Gruppierung assoziierte Paket, Zuweisen eines Klassifizierungsfeldwerts, der der priorisierten Klassifizierung der Gruppierung entspricht, an das Klassifizierungsfeld, und
- Senden der Vielzahl von Paketen mit dem von dem Sendemodul (16) zugeordneten Klassifizierungsfeld.

13. Kommunikationsverfahren zwischen einer Vielzahl von elektronischen Vorrichtungen, die angepasst sind, um miteinander zu kommunizieren, durch ein Kommunikationsverfahren nach einem der Ansprüche 1 bis 11, wobei mindestens eine der elektronischen Vorrichtungen angepasst ist, um die Sendephase zu implementieren, wobei die Priorisierungsmodule der elektronischen Vorrichtungen angepasst sind, um miteinander zu kommunizieren.

14. Kommunikationsverfahren nach Anspruch 13, wobei die Priorisierungsmodule der elektronischen Vorrichtungen angepasst sind, um über eines der Priorisierungsmodule, das sogenannte koordinierende Priorisierungsmodul, miteinander zu kommunizieren.

15. Kommunikationsverfahren nach Anspruch 13 oder 14, wobei die Priorisierungskontexte jedes der Priorisierungsmodule der elektronischen Vorrichtungen identisch sind.

## Claims

1. A method for communication between an electronic transmitting device (10) and an electronic receiving device, the electronic transmitting device and the electronic receiving device being part of a network, the method comprising a transmission phase implemented by the electronic transmitting device, the transmission phase comprising the following steps:
- providing a plurality of packets (210) to an exchange module (12), each packet comprising a classification field, each packet being associated with a grouping, each classification field being included in the field referred to as "Differentiated Services Code Point" or DSCP (in French: point de code des services différenciés),
- providing to a prioritization module (14) a prioritization context, and at least one network metric (212), the prioritization context associating an operational weight with each grouping,
- determining, by the prioritization module (14), a prioritized classification for each grouping as a function of the operational weight of said grouping and of the at least one network metric (216), the prioritized classification corresponding to a service class,
- providing by the prioritization module (14) to the exchange module (12), the prioritized classification for the one or more different groupings (216),
each prioritized classification being associated with a respective classification-field value,
- for each grouping, for each packet associated with said grouping, assigning to the classification field, the classification field value corresponding to the prioritized classification of the grouping (218), and
- transmitting the plurality of packets (220) with the assigned classification field by a transmission module (16).

2. The method for communication according to claim 1, comprising a reception phase implemented by the electronic receiving device, the reception phase comprising reception by the electronic receiving device of the plurality of transmitted packets.

3. The method for communication according to claim 1 or 2, wherein each of the service classes presents a respective authorized bandwidth, the at least one network metric comprising at least one routing metric of the effective bandwidth for each of the service classes.

4. The method for communication according to claim 3, wherein the at least one network metric comprises the respective occupied bandwidth for each service class, the step of determining the prioritized classification comprising, for at least one service class, comparing the at least one respective occupied bandwidth with a threshold, and, in the case where the at least one respective occupied bandwidth is strictly greater than the threshold, comprising a reassignment by the prioritization module to a prioritized classification of at least one grouping for which the classification of an initial prioritization corresponds to said service class, said reassigned grouping.

5. The method for communication according to claim 4, wherein the prioritized classification presents a priority strictly lower than the classification of the initial prioritization, the transmission phase comprising a step of comparing the operational weights of each of the groupings for which the classification of the initial prioritization corresponds to said service class before the reassignment step, the grouping presenting the least important operational weight of all the groupings for which the classification of the initial prioritization corresponds to said service class being selected as the at least one reassigned grouping.

6. The method for communication according to claim 5, wherein, if, during the step of comparing the operational weights, a plurality of groupings presents the least important operational weight, the reassigned grouping is the grouping having the least important operational weight that occupies the least bandwidth over a time window.

7. The method for communication according to claim 5 or 6, wherein at least one operational weight is associated with a minimum priority requirement, the transmission phase comprising a step of verifying the existence of a minimum priority requirement for the least important operational weight, and, where applicable, a step of comparing the priority of the prioritized classification with the priority of the minimum requirement of the least important operational weight, the reassignment step being implemented only if the priority of the prioritized classification is greater than or equal to the priority of the minimum requirement of the least important operational weight.

8. The method for communication according to any one of claims 1 to 7, wherein the electronic transmitting device (10) comprises a measurement probe (18) adapted to measure the quantity of data transmitted from the exchange module (12) towards the transmission module (16) for each service class, the determination by the prioritization module (14) of the prioritized classification for each grouping in addition being carried out as a function of the quantity measured by the measurement probe (18).

9. The method for communication according to claim 8 when it depends on any one of claims 4 to 7, wherein the threshold is equal to a respective maximum threshold of said service class from which the quantity of data measured by the measurement probe (18) is subtracted.

10. The method for communication according to claim 9, wherein, for each service class, the respective maximum threshold is equal to a given portion of the respective authorized bandwidth, the given portion being identical for all service classes.

11. The method for communication according to any one of claims 4 to 10 wherein the step of determining the prioritized classification comprises, for at least one service class, comparing the at least one respective occupied bandwidth with a respective minimum threshold of the service class, and, in the case where the at least one respective occupied bandwidth is strictly less than the respective minimum threshold of the service class, a reassignment by the prioritization module to the prioritized classification corresponding to said service class of at least one grouping presenting a classification not corresponding to said service class.

12. An electronic transmitting device comprising an exchange module (12),
a prioritization module (14) and a transmission module (16), the electronic transmitting device being adapted to implement a transmission phase comprising the following steps:
- providing a plurality of packets to the exchange module (12), each packet comprising a classification field, each packet being associated with a grouping, each classification field being included in the field referred to as "Differentiated Services Code Point" or DSCP (in French: point de code des services différenciés),
- providing to the prioritization module (14) a prioritization context and at least one network metric, the prioritization context associating an operational weight with each grouping,
- determining, by the prioritization module (14), a prioritized classification for each grouping as a function of the operational weight of said grouping and of the at least one network metric, the prioritized classification corresponding to a service class,
- providing, by the prioritization module (14), to the exchange module (12), the prioritized classification for the one or more different -groupings,
each prioritized classification being associated with a respective classification field value,
- for each grouping, for each packet associated with said grouping, assigning to the classification field a classification field value corresponding to the prioritized classification of the grouping, and
- transmitting the plurality of packets with the classification field assigned by the transmission module (16).

13. The method for communication between a plurality of electronic devices adapted to communicate with one another by a method for communication according to any one of claims 1 to 11, at least one of the electronic devices being adapted to implement the transmission phase, the prioritization modules of the electronic devices being adapted to communicate with one another.

14. The method for communication according to claim 13, wherein the prioritization modules of the electronic devices are adapted to communicate with one another by means of one of the prioritization modules, referred to as coordinator prioritization module.

15. The method for communication according to claim 13 or 14, wherein the prioritization contexts of each of the prioritization modules of the electronic devices are identical.
